# EUROPEAN PATENT APPLICATION

(11) **EP 2 372 129 A2**
(43) Date of publication of application: **05.10.2011**
(21) Application number: 11160405.4
(22) Date of filing: 30.03.2011
(51) Int. Cl.: F02C 7/32

(54) **Mounting arrangement for gas turbine engine accessories and gearbox therefor**

(30) Priority: 30.03.2010 US 750167
(71) Applicant: United Technologies Corporation, Hartford, CT 06101 (US)
(72) Inventor: Suciu, Gabriel L., Glastonbury, CT 06033 (US); Dye, Christopher M., Glastonbury, CT 06033 (US); Snape, Nathan, Tolland, CT 06084 (US)
(74) Representative: Leckey, David Herbert

(57) **Abstract**

Gas turbine engine accessories (75 ... 100) are mounted on an accessory gearbox (60) therefor which is in turn mounted on a case (57) of the engine (5) such that the accessories (75 ... 100) extend from the gearbox (60) in directions generally parallel to circumferential tangents to the engine case (57) for compactness, ease in installation and removal of the accessories, reduction of the weight in lines extending from the accessories and minimization of the risk of damage to such accessories and gearbox from the fan blades which may separate from a fan hub upon encountering birds, ice, or other foreign objects.

## Description

### BACKGROUND OF THE INVENTION

### 1. Technical Field

This invention relates generally to gas turbine engines and particularly to a mounting arrangement for gas turbine engine accessories such as electrical generators, pumps and the like and gearboxes therefor.

### 2. Background Information

Gas turbine engines, particularly those which power aircraft, are often provided with accessories such as electrical generators, pumps, air turbines and the like, which are required for operation of the engine and an associated aircraft. For example, electrical generators are provided to generate electrical power needed for electrical systems in the engine itself, such as electronic engine controls and variable pitch vanes and the like. Accessory pumps are provided to pressurize lubrication systems within the engine and hydraulically powered engine systems such as thrust reversers and the like and aircraft systems such as adjustable flight control surfaces. Air turbines driven by compressed air from, for example, an external source, provide starting power to the engine. It is common practice to mechanically connect such accessory generator air turbines and pumps to the engine by means of an accessory gearbox which is itself mechanically connected to the rotational shaft of the engine and mounted on the engine stator. It is also a common practice to mount the accessories mentioned hereinabove on the gearbox itself such that the accessories are driven by, or provide driving power to, internal gearing within the gearbox. Therefore, it will be readily appreciated that the ease in which such accessories and gearboxes may be removed for repair and maintenance thereof is largely a function of the manner in which the accessories and gearboxes are mounted on the engine which is determinative of the free space surrounding the accessories and gearbox available for the removal and reinstallation thereof for maintenance and servicing. The elevated operating temperatures at the aft (downstream) end of the gas turbine engine render such a location thermally hostile to accessories and gearboxes mounted thereat. Therefore, one known practice has been to mount the accessories and gearboxes at the cooler forward (upstream) end of the engine at the fan case portion of the stator thereof.

However, mounting accessories such as pumps and generators at such a forward location requires electrical and fluid lines running from such accessories to traverse significant longitudinal distances from the accessory to a pylon on which the engine is mounted to an associated aircraft, the pylon providing the normal route for the extension of such lines from the engine to systems on the aircraft for which electrical and/or hydraulic power is produced by such accessories. Mounting accessories and gearboxes therefor on the fan case of a gas turbine engine also places such components at risk for damage in the event of breakage or other separation of fan blades from the fan hub in the event of encounters with foreign objects such as ice, birds, or other foreign objects. Furthermore, mounting the accessories and gearbox at such an engine's forwardmost position at the fan case within the nacelle usually restricts possible rearward-facing mounting positions, reducing the available area for component removal and placement.

Since it is a common practice to access the accessories and gearbox from outside the engine's nacelle through openings therein, the relatively large diameter of the engine at the fan case tends to reduce the amount of free space around the accessories and gearbox between those components and the nacelle available for the servicing and maintenance of such components. Accordingly, a mounting arrangement for gas turbine engine accessories and a gearbox therefor in which such accessories and gearbox are conveniently accessible for servicing and maintenance, which does not contribute significantly to the thermal loading of such components by the extreme heat generated by the engine, and which contributes minimally to the length and weight of fluid and electrical lines running from such accessories to associated systems, is sought.

### SUMMARY OF THE DISCLOSURE

In accordance with the present invention, an accessory gearbox for a gas turbine engine is mounted on that portion of the engine case which surrounds the engine core and accessory components which mechanically connect to the engine by means of the gearbox, are mounted on the gearbox such that the accessory components extend from the gearbox in a direction generally circumferentially tangent to the engine case. Such a mounting arrangement reduces the radial free space surrounding the accessories required for the removal and reinstallation thereof for maintenance and servicing, thereby reducing the required diameter and weight of any nacelle which surrounds the engine. The location of the accessories and gearbox on the core case rather than the fan case of the engine reduces the risk of damage to such components from the separation of fan blades from a hub therefor in the event of a bird strike or the ingestion of ice or other foreign manner into the engine.

### BRIEF DESCRIPTION OF THE DRAWINGS

FIG. 1 is a schematic view of a turbofan gas turbine engine of the type employing the present invention.
FIG. 2 is a side elevation of a gas turbine engine such as that shown in FIG. 1, including the accessory and gearbox mounting arrangement of the present invention.
FIG. 3 is an isometric view of an accessory gearbox and accessory components mounted thereon in accordance with the present invention.
FIG. 4 is an aft end view of the gearbox shown in FIG. 3.
FIG. 5 is a side view of the gearbox shown in FIGS. 3 and 4.

### DETAILED DESCRIPTION OF THE INVENTION

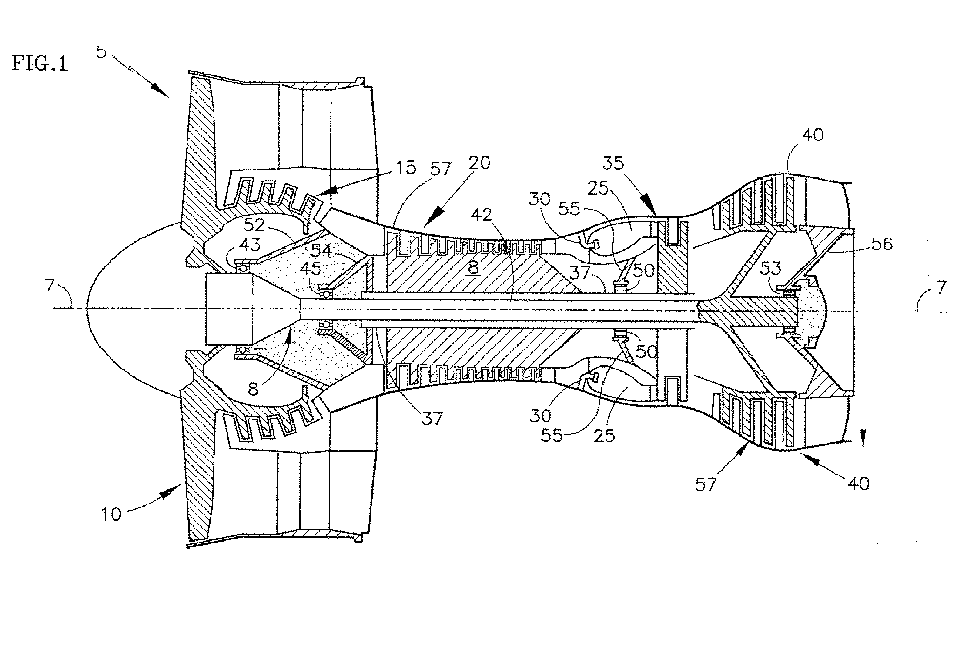

Referring to FIG. 1, a turbofan gas turbine engine 5 has a longitudinal axis 7 about which the rotors 8 of the engine rotate. A fan 10 disposed at the engine inlet draws air into the engine. A low pressure compressor 15 located immediately downstream of fan 10 compresses air exhausted from fan 10 and a high pressure compressor 20 located immediately downstream of low pressure compressor 15, further compresses air received therefrom and exhausts such air to combustors 25 disposed immediately downstream of high pressure compressor 20. Combustors 25 receive fuel through fuel lines 30 and ignite the fuel/air mixture. The burning fuel-air mixture (working medium fluid) flows axially to a high pressure turbine 35 which extracts energy from the working medium fluid and in so doing, rotates hollow shaft 37, thereby driving the rotor of high pressure compressor 20. The working medium fluid exiting the high pressure turbine 35 then enters low pressure turbine 40, which extracts further energy from the working medium fluid. The low pressure turbine rotor provides power to drive the fan 10 and low pressure compressor 15 via low pressure shaft 42, which is disposed interiorly of the shaft 37, coaxial thereto. Working medium fluid exiting the low pressure turbine 40 provides axial thrust for powering an associated aircraft (not shown) or a free turbine (also not shown).

Bearings 43, 45, 50 and 53 radially support the concentric high pressure and low pressure turbine shafts from separate frame structures 52, 54, 55 and 56 respectively, attached to engine case 57, which defines the outer boundary of the engine's stator which circumscribes rotors 8. However, it will be appreciated that the present invention is also well suited for mid-turbine frame engine architectures wherein the upstream bearings for the low and high pressure turbines are mounted on a common frame structure disposed longitudinally (axially) between the high and low pressure turbines.

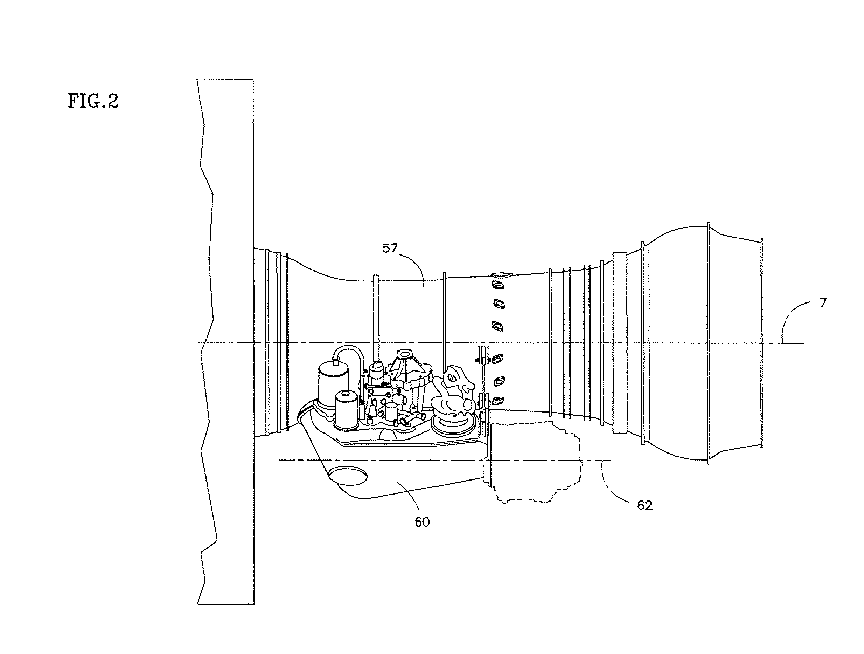

Referring to FIG. 2, an accessory gearbox 60 is mounted on the engine case 57 at that portion of the case which surrounds the core of the engine (high pressure compressor, combustor and turbine). As perhaps best seen in FIG. 1, the core case is typically of a smaller diameter than that portion of the engine case which surrounds the fan and low pressure turbine, thereby allowing enhanced access to gearbox 60 and accessories mounted thereon through openings in the engine nacelle (not shown) which surround the engine. To minimize thermal loading of the gearbox from the high engine operating temperatures at the longitudinal locations of the combustors and turbines, in the preferred embodiment, accessory gearbox 60 is mounted on case 57 at a longitudinal location upstream of combustor 25, for example, at a longitudinal location corresponding to high pressure compressor 20.

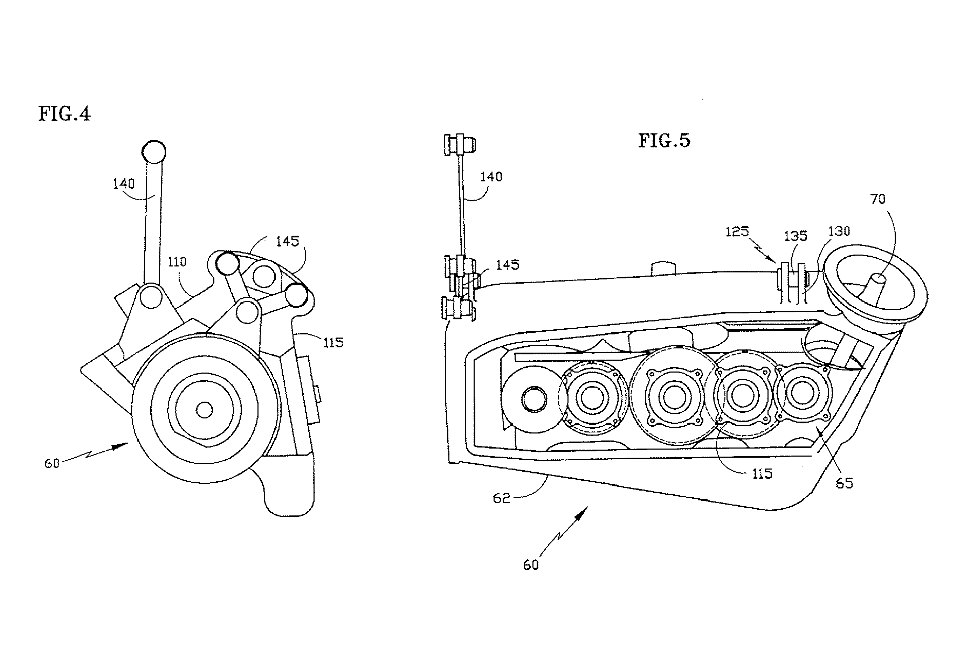

Still referring to FIG. 2, gearbox 60 includes a longitudinal axis 62 which is generally parallel to longitudinal axis 7 of the engine itself. Gearbox 60 is provided with internal gearing, portions of which are shown at 65 (FIG. 5). However, the details of such gearing will depend upon the torque and power characteristics of such accessories as well as the configuration of the mechanical connections thereto and the speed at which accessory gearbox 60 is driven by engine 5. It will be understood that the present invention may be employed with a variety of gas turbine engines and engine accessories. Therefore, for clarity of description and illustration, details of internal gearing 65 are not shown herein, but will suggest themselves to those skilled in the art based upon the characteristics of the engine and accessories with which the present invention is employed.

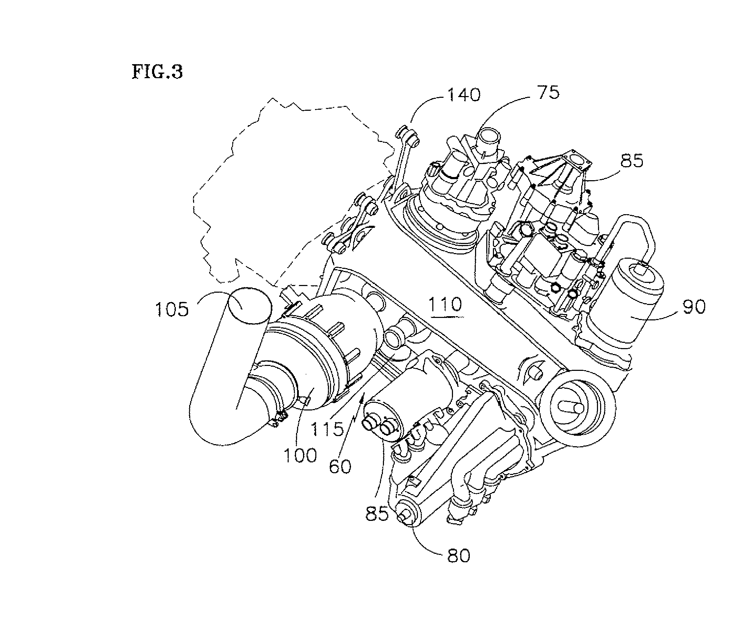

As best seen in FIGS. 3 and 5, mechanical input power is provided to gearbox 60 through shaft 70, driven by the engine rotor, being connected thereto through suitable gearing (not shown) internally of the engine.

Referring to FIG. 3, a number of accessories employed in the auxiliary systems of engine 5 set forth hereinabove are shown mounted on the accessory gearbox 60. Among those accessories with which the mounting arrangement of the present invention may be employed are hydraulic pump 75 which provides hydraulic fluid pressure to hydraulically operated systems on engine 5 and an associated aircraft (not shown) and oil pump 80 which pressurizes lubrication systems employed in the engine, such as, for the bearings thereof as well as any similar systems on the associated aircraft. Alternator 85 provides electrical power to electrical systems on the engine or associated with the aircraft, and fuel pump 90 pumps fuel from a reservoir thereof (not shown) to combustors 25. It will be understood that these accessories may be part of modules which include other associated equipment. For example, fuel pump 90 may be part of a module which also includes a fuel filter as well as associated manifolding and fuel metering valving. Also shown in FIG. 3 is an air turbine starter 100 which receives pressurized air through conduit 105 for providing input power to gearbox 60 upon engine starting. Still referring to FIG. 3, the accessories enumerated hereinabove are mounted on a pair of mounting surfaces 110, 115, angularly offset by approximately 110° from one another. Input and output shafts of the accessories illustrated in FIG. 3 and described hereinabove connect to internal gearing 65 through openings in the mounting surfaces, the accessories being mounted to the mounting surfaces by any suitable means such as bolted connections and the like. The angular offset of mounting surfaces 110 and 115 causes the accessory components mounted thereon to extend from the gearbox in directions generally circumferentially tangent to engine core case 57.

Referring to FIGs. 3-5, accessory gearbox 60 is mounted on the engine case by means of a forward mounting clevis 125 comprising a pair of spaced lugs 130 which receive thereinbetween a complementary lug (not shown) on the engine case, the clevis lugs and engine case lug being pinned together by pin 135. Gearbox 60 is connected to the engine case at the aft end of the gearbox by one or more extensible links 140 which connect at the inner ends thereof to the engine case and at the outer ends thereof to a bracket 145 at the aft end of the gearbox housing. It will be appreciated that the pinned connection of the gearbox housing to the engine case at the forward end of the gearbox and the connection at the rear end of the gearbox to extensible links 140 allow limited pivotal movement of the gearbox with respect to the engine case to accommodate torsional reaction of the gearbox housing to loads thereon from the operation of internal gearing 65. The ability of the gearbox to pivotally move with respect to the engine case also isolates the gearbox from mechanical loads on the engine case due to, for example, engine shaft bending or the like, thereby mitigating damage to the gearbox from such events.

It will thus be seen that the accessory and gearbox mounting arrangement of the present invention allow the accessories to be removed from the gearbox and reinstalled thereon in directions generally tangential to the circumference of the engine case in a compact arrangement minimizing the amount of radical free space outside of the engine case required for such removal and installation. Minimizing the radial free space required for such accessory installation and removal minimizes the required size of an associated nacelle, thereby reducing the weight thereof Mounting the accessory gearbox on the engine core case reduces the risk of damage to the gearbox and accessories from fan blades which may separate from the fan hub upon strikes from birds, ice or other foreign objects. Moreover, since the engine accessories and gearbox are disposed on the core case, they are located longitudinally on the engine case proximal to the location of the attachment of the case to an associated pylon which supports the engine from an associate aircraft. This minimizes the longitudinal extension of wiring and plumbing from the accessories to the pylon which provides a route for such wiring and plumbing to the aircraft thereby reducing the weight associated with such longitudinal wiring and plumbing extensions.

While specific accessories have been shown and described as having a specific angular displacement between the mounting surfaces therefor, the present invention may be used with other engine accessories and angular displacements as will be determined by the specific geometry of the engine case.

Accordingly, it will be understood that these and various other modifications and embodiments may be employed without departing from the scope of the present invention as set forth in the claims appended hereto.

## Claims

1. A gas turbine engine (5) having a rotor (8), rotational about a central longitudinal axis (7), said rotor being circumscribed by a stator including an outer case (57), said gas turbine engine (5) including at least one auxiliary system including an accessory module (75; 80; 85; 90; 100) in driving connection to said gas turbine engine (5) by way of an accessory gearbox (60) having a housing mounted on said stator case (57), said accessory gearbox housing including a surface (110; 115) on which said accessory module (75 ... 100) is removably mounted such that said accessory module (75 ... 100) extends from said gearbox housing in a direction generally parallel to a circumferential tangent to said outer case (57).

2. The gas turbine engine of claim 1, wherein said accessory module comprises a fuel pump (90).

3. The gas turbine engine of claim 2, wherein said fuel pump accessory module (90) further comprises a fuel metering valve.

4. The gas turbine engine of claim 2, wherein said fuel pump accessory module (90) further comprises a fuel metering valve, a fuel filter and a fuel manifold.

5. The gas turbine engine of any preceding claim, wherein said accessory module comprises an air turbine (100).

6. The gas turbine engine of any preceding claim, wherein said accessory module comprises a hydraulic fluid pump (75).

7. The gas turbine engine of any preceding claim, wherein said accessory module comprises a lubricating oil pump (80).

8. The gas turbine engine of any preceding claim, wherein said accessory module comprises an electric generator (85).

9. The gas turbine engine of any preceding claim wherein said accessory gearbox (30) comprises internal gearing within said housing, said housing including a pair of angularly offset mounting surfaces (110, 115) adapted for the mounting of a pair of accessory modules (75 ... 100) adapted for driving connection to said gearing, each of said mounting surfaces (110, 115) including at least one opening therein for accommodating therethrough a mechanical power connection of one of said accessory modules with said internal gearing.

10. The gas turbine engine of claim 9, wherein said pair of accessory mounting surfaces (110, 115) are angularly offset from each other by approximately 110°.

11. The gas turbine engine of any preceding claim, wherein said gas turbine engine (5) includes a turbine (35) for capturing energy from working fluid flowing through said gas turbine engine (5), said accessory gearbox (60) being mounted on said stator case (57) at longitudinal location upstream of said turbine (35) for minimizing heating of said gearbox (60) by said turbine (35).

12. The gas turbine engine of any preceding claim, wherein said gas turbine engine (5) includes a combustor (25) for burning fuel within said engine (5), said accessory gearbox (60) being mounted on said stator case (57) at a longitudinal location upstream of said combustor (25) for minimizing heating of said gearbox (60) by said combustor (35).

13. A gas turbine engine accessory gearbox (60), comprising internal gearing disposed within a housing having a longitudinal axis, said housing including a pair of angularly offset mounting surfaces (110, 115) adapted for the mounting of a pair of accessory modules (75 ... 100) adapted for driving connection to said gearing, each of said mounting surfaces (110, 115) including at least one opening therein for accommodating therethrough a mechanical power connection of one of said accessory modules with said internal gearing.

14. The gas turbine engine accessory gearbox of claim 13, wherein said pair of accessory mounting surfaces (110, 115) are angularly offset from each other by approximately 110°.
